# EUROPÄISCHE PATENTSCHRIFT

(11) **EP 1 026 050 B1**
(45) Veröffentlichungstag und Bekanntmachung des Hinweises auf die Patenterteilung: **28.04.2004**
(21) Anmeldenummer: 00102118.7
(22) Anmeldetag: 04.02.2000
(51) Int. Cl.: B60R 21/20, B62D 7/22

(54) **Airbagmodul als Schwingungsdämpfer**
Airbag module dampening vibrations
Module de coussin gonflable amortisseur de vibrations

(30) Priorität: 05.02.1999 DE 29902033 U
(43) Veröffentlichungstag der Anmeldung: 09.08.2000
(73) Patentinhaber: TRW Automotive Safety Systems GmbH, 63743 Aschaffenburg (DE)
(72) Erfinder: Frisch, Ralph, 63776 Mömbris (DE)
(74) Vertreter: Kitzhofer, Thomas, Dipl.-Ing.

(56) Entgegenhaltungen:
- DE-A- 19 908 915
- DE-U- 29 816 923
- US-A- 5 826 901

## Beschreibung

Die Erfindung betrifft ein Airbagmodul für ein Kraftfahrzeuglenkrad mit einem Gassack, einem Gasgenerator, einer Abdeckkappe, einem Generatorträger sowie Mitteln zur Verbindung der genannten Modulteile zu einer Baueinheit.

Bei einem bekannten Lenkrad dient ein Airbagmodul dieser Art insgesamt oder ein Teil davon als Schwingungsdämpfer, d. h. zur Unterdrückung von unerwünschten Vibrationen, die vom Fahrwerk angeregt und in das Lenkrad übertragen werden (DE 3925761 A1). Zu diesem Zweck ist das Airbagmodul oder ein Teil davon so mit dem Lenkrad verbunden, daß eine gewisse Relativbewegung zwischen Airbagmodul und Lenkrad möglich ist. Die eigentlichen Verbindungsmittel bestehen aus Nieten oder Schrauben, wobei jedoch durch zwischen den miteinander verbundenen Teilen angeordnete elastische Mittel dafür gesorgt wird, daß keine starre Verbindung entsteht und das Airbagmodul oder ein Teil davon relativ zum Lenkrad schwingen und somit als Schwingungsdämpfer benutzt werden kann.

DE 29816923 U1 beschreibt einen Gasgenerator als Schwingungstilger in einem Lenkrad. Ein Gummiring ist im Airbagmodulgehäse befestigt und hat auf der Innenseite einen Schlitz in welchen ein Flansch des Gasgenerators eingreift.

Es hat sich jedoch gezeigt, daß mit der bekannten elastischen Verbindung zwischen Airbagmodul und Lenkrad nur sehr kleine Schwingungsamplituden realisierbar sind und daß die Dämpfung nur in einem verhältnismäßig schmalen Frequenzbereich wirksam ist, weil das elastische Verformungsvermögen der benutzten elastischen Mittel durch die eigentlichen Verbindungsmittel (Nieten, Schrauben) stark eingeschränkt wird.

Es besteht somit die Aufgabe, den Grundgedanken der Benutzung des Airbagmodul als Schwingungsdämpfer im Lenkrad weiterzuentwickeln und so zu verbessern, daß unerwünschte Vibrationen des Lenkrades besser unterdrückt werden können.

Zur Lösung dieser Aufgabe wird ein Airbagmodul vorgeschlagen, das gekennzeichnet ist durch ein ringförmiges Montageblech sowie einen parallel zur Lenkradachse ausgerichteten Montagezylinder aus elastischem Werkstoff, dessen freie Ränder einerseits mit dem Montageblech und andererseits mit dem Montageflansch verbunden sind.

Auf diese Weise ist der Gasgenerator, der die größte Einzelmasse des Airbagmoduls darstellt, allein über den Montagezylinder aus elastischen Werkstoff mit den übrigen Bauteilen des Airbagmoduls verbunden und kann so als Schwingungsdämpfer benutzt werden. Durch konstruktive Gestaltung und Materialauswahl kann der Montagezylinder leicht an unterschiedliche Bedürfnisse angepaßt werden, so daß die von Fahrzeugtyp zu Fahrzeugtyp unterschiedlichen störende Vibrationen wirksam unterdrückt werden können. Durch den Verzicht auf sonstige Verbindungsmittel zwischen Gasgenerator und Montageblech wird die Auslegung des Montagezylinders nicht eingeschränkt und kann daher - abgesehen von der für eine zuverlässige Verbindung erforderlichen Festigkeit - ganz auf die schwingungstechnischen Bedürfnisse abgestimmt werden. Mit einem Hilfsflansch (vergleiche Anspruch 12) kann man dafür sorgen, daß der Gasgenerator selbst dann vom Airbagmodul nicht vollständig abgetrennt werden kann, wenn beim explosionsartigen Aufblasen des Gassacks die auslegungsmäßigen Reaktionskräfte soweit überschritten werden sollten, daß der Montagezylinder zerstört wird. Auf der anderen Seite stellt der erfindungsgemäße Montagezylinder ein konstruktiv relativ einfaches Bauteil dar, das wenig Montageraum erfordert und außerdem den Luftsackinnenraum gegen die Umgebung abdichten kann, so daß keine Verunreinigungen in den Luftsack eindringen und im Aktivierungsfall keine Füllgase austreten können.

Der elastische Montagezylinder kann auch mit einem mit dem Gehäuse des Gasgenerators verbundenen umlaufenden Montageflansch verbunden sein.

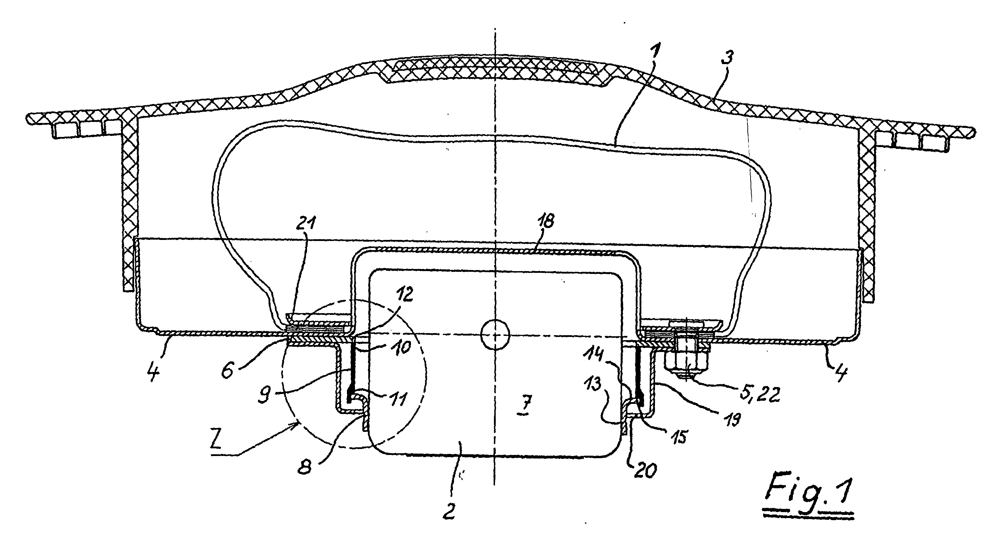

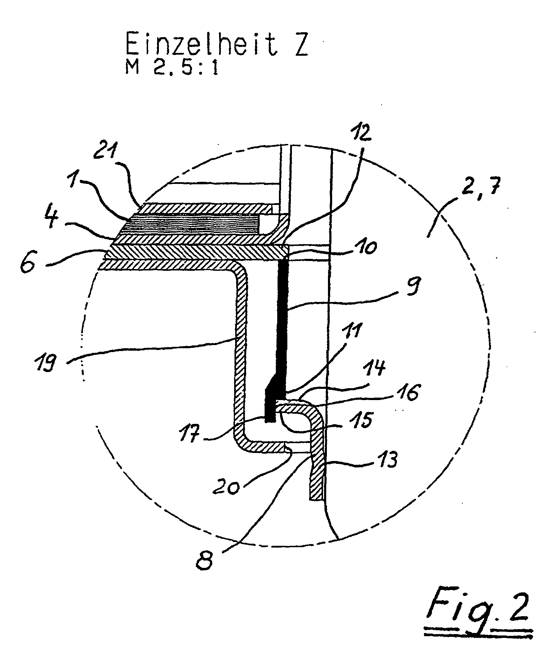

Weitere Einzelheiten und Vorteile sind in den Unteransprüchen 2 bis 17 beschrieben. Ein Ausführungsbeispiel ist in den Figuren 1 und 2 dargestellt. Es zeigen:
Figur 1 einen Schnitt durch ein Airbagmodul,
Figur 2 einen vergrößerten Ausschnitt aus Figur 1,
Figur 3 einen Halbschnitt durch ein Airbagmodul gemäß einer weiteren Ausführungsform, und
Figur 4 eine Abwicklung des Außenumfangs des vorspringenden Wandbereichs des Montagezylinders.

Das in Figur 1 im Schnitt dargestellte Ausführungsbeispiel umfaßt in an sich bekannter Weise einen Gassack 1, einen Gasgenerator 2, eine Abdeckkappe 3, einen Generatorträger 4 sowie Mittel 5 zum verbinden der genannten Modulteile zu einer Baueinheit. Der Gasgenerator 2 besitzt einen umlaufenden Montageflansch 8, der im Querschnitt L-förmig ausgebildet ist und der einen konzentrisch zum Gehäuse 7 des Gasgenerators 2 verlaufenden Schenkel 13 sowie einen davon etwa rechtwinklig nach außen abstehenden Schenkel 14 umfaßt.

Das erfindungsgemäße Airbagmodul umfaßt ferner ein ringförmiges Montageblech 6, das im Befestigungsbereich parallel auf die Unterseite des Generatorträgers 4 aufgesetzt ist. Ein erfindungsgemäß vorgesehener Montagezylinder 9 aus einem elastischem Werkstoff ist mit seinen freien Rändern 10 und 11 einerseits mit dem Montageblech 6 und andererseits mit dem Montageflansch 8 des Gasgenerator 2 verbunden. Damit ist der Gasgenerator 2 relativ zu den übrigen Bauteilen des Airbagmodul schwingfähig gelagert und kann zur Dämpfung unerwünschter Vibrationen benutzt werden.

Der die Eintrittsöffnung umgebende Rand des Gassacks 1 ist in an sich bekannter Weise zwischen einem Gassackhalteblech 21 und dem Generatorträger 4 eingespannt. Im dargestellten Ausführungsbeispiel bestehen die Mittel 5 zum Verbinden der Modulteile aus Schrauben 22 mit Schraubmuttern. Zusammen mit dem Gassackhalteblech 21 und dem Generatorträger 4 sind auch das Montageblech 6 sowie ein im Querschnitt hutförmiger Hilfsflansch 19 mittels der Schrauben 22 zusammengespannt. Der erfindungsgemäße Montagezylinder 9 ist mit seinem oberen freien Rand senkrecht auf dem Montageblech 6 stehend mit dessen inneren Rand 12 verbunden. Der untere Rand L des Montagezylinders 9 ist mit dem äußeren Rand 15 des radial nach außen abstehenden Schenkels 14 verbunden.

Figur 2 zeigt als Ausschnitt die Anbindung des Montagezylinders 9 an die Modulbauteile noch einmal in vergrößerter Darstellung. Im Einspannbereich liegen übereinander das Gassackhalteblech 21, der Rand des Luftsacks 1, der Generatorträger 4, das Montageblech 6 und der Hilfsflansch 19. Der innere Rand 12 des ringförmigen Montageblechs 6 ist mit dem oberen Rand 10 des Montagezylinders 9 verbunden. Der am Gehäuse 7 des Gasgenerators 2 angebrachte Montageflansch 8 ist im Querschnitt L-förmig ausgebildet und besitzt einen zur Wandung des Gehäuses 7 konzentrisch verlaufenden Schenkel 13 und einen dazu etwa rechtwinklig radial nach außen ragenden Schenkel 14, dessen äußeres Ende 15 mit dem unteren Ende 11 des Montagezylinders verbunden ist.

Am unteren Rand 11 des Montagezylinders 9 ist durch einen nach unten vorspringenden Wandbereich 17 ein Anschlag 16 für den äußeren Rand 15 des Montageflansches 8 ausgebildet, um die gegenseitige Zuordnung der Bauteile zu erleichtern. In Verbindung mit dem unteren Rand 11 des Montagezylinders 9 ist damit in radialer und axialer Richtung die gegenseitige Anlagepositiön von Montageflansch und Montagezylinder eindeutig definiert. Der im Querschnitt etwa hutförmig ausgebildete Hilfsflansch 19 besitzt eine zentrale Ausnehmung 20 deren Durchmesser kleiner ist als der äußere Durchmesser des Montageflansches. Sollte bei Überbeanspruchung der Montagezylinder 9 reißen oder überdehnt werden, kommt der radial nach außen weisende Schenkel 14 des Montageflansches 8 innen am Hilfsflansch 19 zur Anlage, womit der Gasgenerator 2 abgestützt ist und auch bei einer Zerstörung des Montagezylinders 9 im Airbagmodul gehalten bleibt. Außerdem kann der untere Rand 11 des Montagezylinders 9 für eine Abdichtung des Innenraums gegen die Umgebung benutzt werden, wenn er gewollt oder ungewollt am Hilfsflansch 19 zur Anlage kommt.

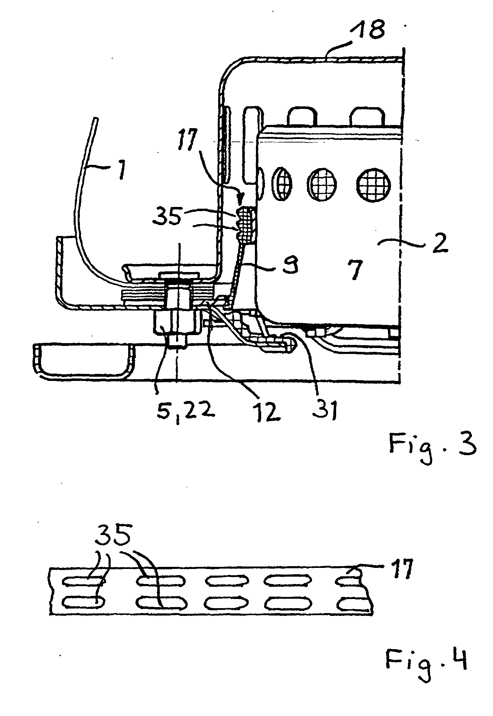

Bei der Ausführungsform nach Figur 3 hängt der Gasgenerator 2 nicht im Montagezylinder 9, sondern steht in ihm, wodurch beim Zünden des Gasgenerators 2 eine Druckkraft auf den Montagezylinder 9 ausgeübt wird, die ihn weniger beansprucht als die Zugbelastung bei der Ausführungsform nach Figur 2. Beim Zünden des Gasgenerators 2 sitzt der Gasgenerator 2 an einem Abstützring 31 auf.

Als radialer Anschlag für den schwingenden Gasgenerator 2 im Fahrbetrieb wirkt der im Bereich der Befestigung des Montagezylinders 9 mit dem Gasgenerator 2 (der im übrigen keinen Montageflansch hat) vorgesehene außenseitige, radial vorspringende Wandbereich 17, der gegen die Innenseite des Diffusors 18 schlagen kann.

Das Anschlagen des Wandbereichs 17 am Diffusor 18 während des Fahrbetriebs kann zu unerwünschten Geräuschen führen (Schmatzgeräusche). Diese können verhindert werden, wenn der Wandbereich 17 an seinem Außenumfang mehrere, über den Umfang verteilte Ausnehmungen 35 hat, die sich wie Umfangsnuten über einen Teil des Umfangs erstrecken, wie Figur 4 zeigt.

## Patentansprüche

1. Airbagmodul für ein Kraftfahrzeuglenkrad mit einem Gassack (1), einem Gasgenerator (2), einer Abdeckkappe (3), einem Generatorträger (4) sowie Mitteln (5) zum Verbinden der genannten Modulteile zu einer Baueinheit, wobei am Generatorträger (4) ein ringförmiges Montageblech (6) sowie ein parallel zur Lenkradachse ausgerichtetet Montagezylinder (9) aus einem elastischen Werkstoff angeordnet sind, **dadurch gekennzeichnet, daß** die freien Ränder (10, 11) den Montagezylinder einerseits mit dem Montageblech (6) und andererseits mit dem Gasgenerator (2) verbinden.

2. Airbagmodul nach Anspruch 1, **dadurch gekennzeichnet, daß** der Gasgenerator (2) einen mit dem Gehäuse (7) des Gasgenerators (2) verbundenen, umlaufenden Montageflansch (8) aufweist und der Montagezylinder (9) mit dem Montageflansch (8) verbunden ist.

3. Airbagmodul nach Anspruch 1 oder 2, **dadurch gekennzeichnet, daß** die Ränder (10, 11) durch Vulkanisieren mit dem Montageblech (6) und dem Gasgenerator (2) verbunden sind.

4. Airbagmodul nach einem der Ansprüche 1 bis 3, **dadurch gekennzeichnet, daß** die Ränder (10, 11) durch Kleben mit dem Montageblech (6) und dem Gasgenerator (2) verbunden sind.

5. Airbagmodul nach Anspruch 2, **dadurch gekennzeichnet, daß** die Ränder (10, 11) durch Einklemmen mit dem Montageblech (6) und dem Montageflansch (8) verbunden sind.

6. Airbagmodul nach einem der Ansprüche 1 bis 5, **dadurch gekennzeichnet, daß** das Montageblech (6) senkrecht zur Lenkradachse angeordnet ist.

7. Airbagmodul nach Anspruch 6, **dadurch gekennzeichnet, daß** der innere Rand (12) des Montagebleches (6) das Gehäuse (7) des Gasgenerators (2) konzentrisch und beabstandet umgibt.

8. Airbagmodul nach Anspruch 7, **dadurch gekennzeichnet, daß** der obere Rand (10) des Montagezylinders (9) senkrecht auf dem Montageblech (6) stehend mit dessen innerem Rand (12) verbunden ist.

9. Airbagmodul nach einem der Ansprüche 1 bis 8, **dadurch gekennzeichnet, daß** der Gasgenerator (2) einen Montageflansch (8) mit einem L-förmigen Querschnitt hat, welcher mit seinem parallel zur Lenkradachse verlaufenden Schenkel (13) mit dem Gehäuse (7) des Gasgenerators (2) und mit dem Rand (15) seines radial nach außen abstehenden Schenkels (14) mit dem Montagezylinder (9) verbunden ist.

10. Airbagmodul nach einem der Ansprüche 1 bis 9, **dadurch gekennzeichnet, daß** der Montagezylinder (9) an seinem unteren Rand (11) einen ringförmigen Anschlag (16) für den Rand (15) eines Montageflansches (8) des Gasgenerators (2) aufweist.

11. Airbagmodul nach einem der Ansprüche 1 bis 10, **dadurch gekennzeichnet, daß** der Montagezylinder (9) im Bereich der Befestigung am Gasgenerator einen radial vorspringenden Wandbereich (17) hat, der auf einen radialen Anschlag treffen kann.

12. Airbagmodul nach Anspruch 11, **dadurch gekennzeichnet, daß** der vorspringende Wandbereich (17) an seinem Außenumfang Ausnehmungen hat.

13. Airbagmodul nach Anspruch 12, **dadurch gekennzeichnet, daß** die Ausnehmungen sich über einen Teil des Außenumfangs erstrecken.

14. Airbagmodul nach Anspruch 10 oder Anspruch 10 und einem der Ansprüche 1 bis 13, **dadurch gekennzeichnet, daß** der Montagezylinder (9) an seinem unteren Rand (11) einen nach unten vorspringenden Wandbereich (17) aufweist und daß der Anschlag (16) in diesem Wandbereich (17) ausgebildet ist.

15. Airbagmodul nach Anspruch 14, **dadurch gekennzeichnet, daß** der Wandbereich (17) um etwa die Wanddicke des Montagezylinders (9) nach außen vorspringend ausgebildet ist und daß der äußere Durchmesser des Montageflansches (8) etwa genauso groß ist wie der äußere Durchmesser des Montagezylinders (9) im nicht nach außen vorspringenden Bereich.

16. Airbagmodul nach Anspruch 15, **dadurch gekennzeichnet, daß** der Wandbereich (17) nach unten vorspringend ausgebildet ist und zur Abdichtung des Innenraums benutzt werden kann.

17. Airbagmodul nach einem der Ansprüche 1 bis 16, **dadurch gekennzeichnet, daß** der obere Teil des Gehäuses (7) des Gasgenerators (2) von einem zum Gehäuse (7) allseitig Abstand haltenden, im Querschnitt hutförmigen Diffusor (18) umgeben ist.

18. Airbagmodul nach Anspruch 17, **dadurch gekennzeichnet, daß** der untere Teil des Gehäuses (7) des Gasgenerators (2) von einem zum Gehäuse (7) allseitig Abstand haltenden, im Querschnitt hutförmigen Hilfsflansch (19) mit einer zentralen Ausnehmung (20) umgeben ist, wobei der Durchmesser der Ausnehmung (20) kleiner ist als der äußere Durchmesser eines Montageflansches (8) des Gasgenerators (2).

19. Airbagmodul nach einem der Ansprüche 1 bis 18, **dadurch gekennzeichnet, daß** der Diffusor (18) und der Generatorträger (4) einstückig aus einem umgeformten Blechabschnitt bestehen.

## Claims

1. An airbag module for a motor vehicle steering wheel, comprising a gas bag (1), an inflator (2), a cover cap (3), an inflator support (4), and means (5) for connecting the cited module parts to form a structural unit, an annular mounting plate (6) as well as a mounting cylinder (9) of an elastic material and oriented parallel to the steering wheel axis being arranged on the inflator support (4), **characterized in that** the free rims (10, 11) connect the mounting cylinder on the one hand to the mounting plate (6) and on the other hand to the inflator (2).

2. The airbag module as set forth in claim 1, **characterized in that** the inflator (2) comprises a surrounding mounting flange (8) connected to the housing (7) of the inflator (2) and the mounting cylinder (9) is connected to the mounting flange (8).

3. The airbag module as set forth in claim 1 or 2, **characterized in that** the rims (10, 11) are joined to the mounting plate (6) and the inflator (2) by vulcanizing.

4. The airbag module as set forth in any of claims 1 to 3, **characterized in that** the rims (10, 11) are joined to the mounting plate (6) and the inflator (2) by bonding.

5. The airbag module as set forth in claim 2, **characterized in that** the rims (10, 11) are joined to the mounting plate (6) and the mounting flange (8) by clamping.

6. The airbag module as set forth in any of claims 1 to 5, **characterized in that** the mounting plate (6) is arranged perpendicularly to the steering wheel axis.

7. The airbag module as set forth in claim 6, **characterized in that** the inner rim (12) of the mounting plate (6) surrounds the housing (7) of the inflator (2) concentrically and spaced away therefrom.

8. The airbag module as set forth in claim 7, **characterized in that** the upper rim (10) of the mounting cylinder (9) is connected to the inner rim (12) of the mounting plate (6) so as to stand perpendicular thereto.

9. The airbag module as set forth in any of claims 1 to 8, **characterized in that** the inflator (2) has a mounting flange (8) which is L-shaped in cross-section and is connected by its leg (13) extending parallel to the steering wheel axis to the housing (7) of the inflator (2) and by the rim (15) of its leg (14) protruding radially outwards to the mounting cylinder (9).

10. The airbag module as set forth in any of claims 1 to 9, **characterized in that** the mounting cylinder (9) comprises at its lower rim (11) an annular stop (16) for the rim (15) of a mounting flange (8) of the inflator (2).

11. The airbag module as set forth in any of claims 1 to 10, **characterized in that** the mounting cylinder (9), in the region of attachment to the inflator, has a radially projecting wall portion (17) which is able to strike on a radial stop.

12. The airbag module as set forth in claim 11, **characterized in that** the projecting wall portion (17) has recesses at its outer circumference.

13. The airbag module as set forth in claim 12, **characterized in that** the recesses extend over a portion of the outer circumference.

14. The airbag module as set forth in claim 10 or claim 10 and any of claims 11 to 13, **characterized in that** the mounting cylinder (9) comprises at its lower rim (11) a wall portion (17) projecting downwards and that the stop (16) is configured in this wall portion (17).

15. The airbag module as set forth in claim 14, **characterized in that** the wall portion (17) is configured so as to project outwards by roughly the wall thickness of the mounting cylinder (9) and that the outer diameter of the mounting flange (8) is roughly just as large as the outer diameter of the mounting cylinder (9) in the portion not projecting outwards.

16. The airbag module as set forth in claim 15, **characterized in that** the wall portion (17) is configured so as to project downwards and may be employed for sealing the interior.

17. The airbag module as set forth in any of claims 1 to 16, **characterized in that** the upper part of the housing (7) of the inflator (2) is surrounded by a diffusor (18) which is hat-shaped in cross-section and spaced away from the housing (7) on all sides thereof.

18. The airbag module as set forth in claim 17, **characterized in that** the lower part of the housing (7) of the inflator (2) is surrounded by an auxiliary flange (19) which is hat-shaped in cross-section and spaced away from the housing (7) on all sides thereof and has a central recess (20), the diameter of the recess (20) being smaller than the outer diameter of a mounting flange (8) of the inflator (2).

19. The airbag module as set forth in any of claims 1 to 18, **characterized in that** the diffusor (18) and the inflator support (4) consist of one piece of a shaped section of sheet-metal.

## Revendications

1. Module d'airbag pour un volant de véhicule automobile, comportant un coussin à gaz (1), un générateur de gaz (2), un couvercle (3), un support de générateur (4) ainsi que des moyens (5) pour relier lesdites parties de module à une unité modulaire, une tôle de montage (6) de forme annulaire ainsi qu'un cylindre de montage (9) en matériau élastique aligné parallèlement à l'axe du volant étant agencés sur le support de générateur (4), **caractérisé en ce que** les bords libres (10, 11) relient le cylindre de montage d'une part à la tôle de montage (6) et d'autre part au générateur de gaz (2).

2. Module d'airbag selon la revendication 1, **caractérisé en ce que** le générateur de gaz (2) présente une bride de montage (8) périphérique reliée au boîtier (7) du générateur de gaz (2), et le cylindre de montage (9) est relié à la bride de montage (8).

3. Module d'airbag selon la revendication 1 ou 2, **caractérisé en ce que** les bords (10, 11) sont reliés par vulcanisation à la tôle de montage (6) et au générateur de gaz (2).

4. Module d'airbag selon l'une des revendications 1 à 3, **caractérisé en ce que** les bords (10, 11) sont reliés par collage à la tôle de montage (6) et au générateur de gaz (2).

5. Module d'airbag selon la revendication 2, **caractérisé en ce que** les bords (10, 11) sont reliés par serrage à la tôle de montage (6) et à la bride de montage (8).

6. Module d'airbag selon l'une des revendications 1 à 5, **caractérisé en ce que** la tôle de montage (6) est agencée perpendiculairement à l'axe du volant.

7. Module d'airbag selon la revendication 6, **caractérisé en ce que** le bord intérieur (12) de la tôle de montage (6) entoure de manière concentrique et à distance le boîtier (7) du générateur de gaz (2).

8. Module d'airbag selon la revendication 7, **caractérisé en ce que** le bord supérieur (10) du cylindre de montage (9) est dressé à la verticale sur la tôle de montage (6) et reliée au bord intérieur (12) de celle-ci.

9. Module d'airbag selon l'une des revendications 1 à 8, **caractérisé en ce que** le générateur de gaz (2) possède une bride de montage (8) avec une section transversale en forme de L, laquelle est reliée, par sa branche (13) s'étendant parallèlement à l'axe du volant, au boîtier (7) du générateur de gaz (2) et, par le bord (15) de sa branche (14) faisant saillie radialement vers l'extérieur, au cylindre de montage (9).

10. Module d'airbag selon l'une des revendications 1 à 9, **caractérisé en ce que** le cylindre de montage (9) présente à son bord inférieur (11) une butée (16) annulaire pour le bord (15) d'une bride de montage (8) du générateur de gaz (2).

11. Module d'airbag selon l'une des revendications 1 à 10, **caractérisé en ce que** le cylindre de montage (9) possède dans la région de la fixation au générateur de gaz (2) une zone de paroi (17) faisant saillie radialement qui peut frapper une butée radiale.

12. Module d'airbag selon la revendication 11, **caractérisé en ce que** la zone de paroi (17) en saillie possède des évidements sur sa périphérie extérieure.

13. Module d'airbag selon la revendication 12, **caractérisé en ce que** les évidements s'étendent sur une partie de la périphérie extérieure.

14. Module d'airbag selon la revendication 10 ou selon la revendication 10 et une des revendications 11 à 13, **caractérisé en ce que** le cylindre de montage (9) présente sur son bord inférieur (11) une zone de paroi (17) faisant saillie vers le ba,s et **en ce que** la butée (16) est réalisée dans cette zone de paroi (17).

15. Module d'airbag selon la revendication 14, **caractérisé en ce que** la zone de paroi (17) est réalisé en faisant saillie vers l'extérieur d'approximativement l'épaisseur de paroi du cylindre de montage (9), et **en ce que** le diamètre extérieur de la bride de montage (8) est approximativement exactement aussi grand que le diamètre extérieur du cylindre de montage 89) dans la zone qui ne fait pas saillie vers l'extérieur.

16. Module d'airbag selon la revendication 15, **caractérisé en ce que** la zone de paroi (17) est réalisée en faisant saillie vers le bas et peut être utilisée pour étancher l'espace intérieur.

17. Module d'airbag selon l'une des revendications 1 à 16, **caractérisé en ce que** la partie supérieure du boîtier (7) du générateur de gaz (2) est entourée d'un diffuseur (18) dont la section transversale a la forme d'un chapeau et qui maintient une distance de tous les côtés par rapport au boîtier (7).

18. Module d'airbag selon la revendication 17, **caractérisé en ce que** la partie inférieure du boîtier (7) du générateur de gaz (2) est entourée par une bride auxiliaire (19) avec un évidement (20) central, dont la section transversale a la forme d'un chapeau et qui maintient une distance de tous les côtés par rapport au boîtier (7), le diamètre de l'évidement (20) étant plus petit que le diamètre extérieur d'une bride de montage (8) du générateur de gaz (2).

19. Module d'airbag selon l'une des revendications 1 à 18, **caractérisé en ce que** le diffuseur (18) et le support de générateur sont réalisés d'un seul tenant dans une portion de tôle façonnée.
